# EUROPÄISCHE PATENTSCHRIFT

(11) **EP 2 103 856 B1**
(45) Veröffentlichungstag und Bekanntmachung des Hinweises auf die Patenterteilung: **31.08.2011**
(21) Anmeldenummer: 09152341.5
(22) Anmeldetag: 09.02.2009
(51) Int. Cl.: F16L 11/08, F16L 11/127, B32B 1/08, B32B 25/08

(54) **Schlauch mit einer elektrisch leitfähigen Innenschicht**
Hose with an electrically conductive inner coating
Tuyau flexible doté d'une couche interne conductrice électrique

(30) Priorität: 19.03.2008 DE 102008014988
(43) Veröffentlichungstag der Anmeldung: 23.09.2009
(73) Patentinhaber: ContiTech Schlauch GmbH, 30165 Hannover (DE)
(72) Erfinder: Onken, Kristian, Dr., 34117 Kassel (DE); Wydra, Wolfgang, 34516 Vöhl-Obernburg (DE)
(74) Vertreter: Finger, Karsten

(56) Entgegenhaltungen:
- EP-A1- 0 582 301
- EP-A1- 1 764 211
- EP-A2- 0 826 915
- DE-U1- 8 805 593
- US-A- 5 718 957
- US-A1- 2005 205 149

## Beschreibung

Die Erfindung betrifft einen Schlauch, bestehend wenigstens aus:
- einer Innenschicht aus Kunststoff, der beständig gegenüber dem zu fördernden Medium ist;
- einer oder mehreren elastomeren Zwischenschicht/en, wobei eine Zwischenschicht mit der Innenschicht in direkter Verbindung steht;
- einer oder mehreren eingebetteten Festigkeitsträgerschicht/en sowie
- einer abriebfesten elastomeren Außenschicht.

Hinsichtlich des diesbezüglichen Standes der Technik wird insbesondere auf folgende Patentliteratur verwiesen:
DE 35 24 286 C1
DE 42 32 946 C2
EP 0 222 323 B1
EP 0 582 301 A1
EP 0 82 302 B1
EP 0826 915 A2
EP 1 383 650 B1
EP 1 450 092 B1
US 5 718 957

Schläuche mit einer Innenschicht aus Kunststoff anstelle elastomerer Werkstoffe auf Kautschukbasis finden eine zunehmende Bedeutung, insbesondere bei Chemikalienschläuchen, Treibstoffschläuchen, Kältemittelschläuchen, CO₂-Schläuchen sowie bei Schläuchen in der Lebensmittel- und Pharmaindustrie. Dabei werden je nach Anforderungen bislang spezielle Kunststoffe eingesetzt.

Die derzeitig am häufigsten verwendeten Chemikalienschläuche sind mit einer Fluorkunststoff-Innenschicht aus FEP oder PFA ausgekleidet, wobei hinsichtlich diesbezüglicher Nomenklaturdetails beispielsweise auf die Patentschrift EP 0 582 301 A1 verwiesen wird. Eine ähnliche Werkstoffkonstellation findet man auch bei Treibstoffschläuchen vor. Der Vorteil derartiger Kunststoffe ist ihre hohe Beständigkeit gegenüber einem aggressiven und somit werkstoffschädigenden Medium (z.B. Chemikalien, Öle, Benzin). Der Nachteilteil von PFA ist jedoch die geringe dynamische Tüchtigkeit beim Biegen des Schlauches, verbunden mit häufiger Rissbildung.

Bei Kältemittelschläuchen wie auch CO₂-Schläuchen werden insbesondere Polyamide (z.B. PA6, PA66) oder Polymere auf Basis eines Ethylenvinylalkohols (EVOH) eingesetzt. Im Hinblick auf eine Null-Permeation kommt dabei insbesondere eine Innenschicht in Form einer ersten Schicht aus PA und einer zweiten Schicht aus EVOH zum Einsatz. Diese Werkstoffe sind jedoch für Chemikalienschläuche nicht geeignet. Auch der Einstellbarkeit im Hinblick auf elektrische Leitfähigkeit sind hier Grenzen gesetzt.

Bei Schläuchen mit Anwendungsbereich in der Pharma- und Lebensmittelindustrie müssen grundsätzlich Werkstoffe verwendet werden, die in erster Linie Zulassungen erfüllen müssen, beispielsweise die FDA (amerikanische Lebensmittelzulassung). Diesen Werkstoffen (z.B. FEP und PFA) sind jedoch hinsichtlich dynamischer Tüchtigkeit ebenfalls Grenzen gesetzt.

In der Offenlegungsschrift EP 0 582 301 A1 wird ein Kraftstoffschlauch (Treibstoffschlauch) mit einem Schichtenaufbau der eingangs genannten Art beschrieben. Die Innenschicht besteht aus einem elektrisch leitfähigen oder elektrisch leitfähig einstellbaren fluorhaltigen Kunststoff, insbesondere in Form von PVDF, CTFE, ECTFE, ETFE, FEP, PFA oder PTFE. Der fluorhaltige Kunststoff liegt dabei als Harz vor, vorzugsweise unter Einmischung elektrisch leitfähiger Partikel (z.B. Ruß) in einer Menge von 3 bis 16 Gew.-%, und zwar bezogen auf die Harzmasse. Eine weitere Entwicklung eines Kraftstoffschlauches auf der Basis eines fluorhaltigen Kunststoffharzes für die Innenschicht wird in der Patentschrift US 5 718 957 offenbart.

Die Offenlegungsschrift EP 0 826 915 A2 beschreibt ebenfalls einen Kraftstoffschlauch, wobei die Innenschicht aus einem Fluorplastik besteht. Über die elektrisch leitfähige Ausrüstung der Fluorplastik-Innenschicht wird in dieser Schrift keine Aussage gemacht.

Darüber hinaus ist es bekannt, dass bei einem mehrschichtigen Schlauch der eingangs genannten Art die Elastomerschichten zumeist elektrisch isolierend ausgeführt sind, insbesondere bei einem Chemikalienschlauch. Eine potentiell auftretende elektrische Ladung wird dann ausschließlich über die Innenschicht oder über eine eingearbeitete Litze (z.B. Kupferlitze) abgeleitet.

Der bevorzugte Werkstoff für die Innenschicht eines mehrschichtigen Schlauches der eingangs genannten Art ist ein fluorhaltiger Kunststoff in Form von Polytetrafluorethylen (PTFE), Polyvinylfluorid (PVF) oder Polyvinylidenfluorid (PVDF). Von besonderer Bedeutung ist dabei PTFE. Auch chemische Modifikationen der vorgenannten Werkstoffe können eingesetzt werden. So sind beispielsweise bei einem modifizierten PTFE in der Polymerkette zu einem geringen Anteil andere fluorierte Einheiten eingebaut.

Im Rahmen einer Weiterentwicklung besteht die Aufgabe der Erfindung darin, einen elektrisch leitfähigen Schlauch bereit zu stellen, der einem breiten Anwendungsbereich zugänglich sein soll und der zudem im Rahmen einer Armaturenmontage einen Anschluss eines metallischen Leiters überflüssig macht.

Gelöst wird diese Aufgabe dadurch, dass
- die Innenschicht in Form einer Folie vorliegt oder ein nahtlos extrudierter Innenschlauch ist und
- die elektrisch leitfähigen Partikel gleichmäßig verteilt in einer Menge von 1 bis 2,5 Gew.-% vorhanden sind, und zwar bezogen auf die Gesamtmasse der Innenschicht.

Hinsichtlich der elektrisch leitfähigen Partikel gelangen insbesondere folgende Möglichkeiten zur Anwendung:
- Die elektrisch leitfähigen Partikel sind Ruß und/oder Graphit und/oder Nanotubes. Nanotubes sind Röhren mit schichtartigem Aufbau und wenigen Nanometern Durchmesser. Zu nennen sind hier beispielsweise Nanotubes aus Kohlenstoff (US 7 338 648 B2) oder Molybdändisulfid (MoS₂). Zumeist ist es jedoch ausreichend, wenn Einheitspartikel, beispielsweise ausschließlich Ruß, eingesetzt werden.
- Die elektrisch leitfähigen Partikel bestehen aus einem Polymer, einem Polymerblend oder einer Polymermischung mit elektrisch leitfähigen funktionellen Gruppen, die insbesondere Carbonylgruppen, insbesondere wiederum Estergruppen, sind. Als Beispiele wären hier ein Polyethylenglykolester oder ein Polyethylenglykolcarbonsäureester zu nennen.

Die Stärke der Innenschicht beträgt 0,01 mm bis 3 mm, insbesondere 0,05 mm bis 2 mm, insbesondere wiederum von 0,1 mm bis 1 mm.

Die Innenschicht ist zumindest innerhalb ihrer Kontaktseite zu der mit ihr in Verbindung stehenden Zwischenschicht oberflächenaktiviert, indem diese insbesondere angeätzt oder aufgeraut ist. Die Oberflächenveränderung bzw. Oberflächenbehandlung erfolgt mittels einer chemischen oder physikalischen Methode. Zu nennen wären hier insbesondere Flammenbehandlung, Corona-Entladung, Sputtering, Plasmabehandlung, Natrium-Ammoniak-Verfahren und Natrium-Naphthalin-Verfahren. Auch eine Vielzahl anderer chemischer oder physikalischer Ätzverfahren stehen der Oberflächenaktivierung zur Verfügung. Im Vergleich zu unbehandeltem PTFE werden mit diesen Methoden die Hafteigenschaften dieses Kunststoffes deutlich erhöht. Auf diese Weise wird ein besonders dauerfester Haftverbund zwischen der Innenschicht aus dem elektrisch leitfähigen Kunststoff und der mit ihr in direktem Kontakt stehenden elastomeren Zwischenschicht erzielt.

Der Schlauch weist zumindest eine elastomere Zwischenschicht, die mit der Innenschicht aus dem elektrisch leitfähigen Kunststoff in direktem Kontakt steht, und eine abriebfeste elastomere Außenschicht auf. Gegebenfalls können weitere elastomere Zwischenschichten vorhanden sein. In Verbindung mit der Figurenbeschreibung wird ein Schlauch mit zwei elastomeren Zwischenschichten vorgestellt.

Die Zwischenschicht/en und/oder die Außenschicht basiert/basieren insbesondere auf einer vulkanisierten Kautschukmischung, enthaltend wenigstens eine Kautschukkomponente und Mischungsingredienzien. Als Kautschukkomponenten sind insbesondere zu nennen:
Ethylen-Propylen-Mischpolymerisat (EPM)
Ethylen-Propylen-Dien-Mischpolymerisat (EPDM)
Nitrilkautschuk (NBR)
(teil)hydrierter Nitrilkautschuk (HNBR)
Fluor-Kautschuk (FPM bzw. FKM)
Chloropren-Kautschuk (CR)
Naturkautschuk (NR)
Styrol-Butadien-Kautschuk (SBR)
Isopren-Kautschuk (IR)
Butylkautschuk (IIR)
Brombutylkautschuk (BIIR)
Chlorbutylkautschuk (CIIR)
Butadien-Kautschuk (BR)
Chloriertes Polyethylen (CM)
Chlorsulfoniertes Polyethylen (CSM)
Polyepichlorhydrin (ECO)
Ethylen-Vinylacetat-Kautschuk (EVA)
Acrylat-Kautschuk (ACM)
Siliconkautschuk (MVQ)
Fluorierter Methylsiliconkautschuk (MFQ)
Perfluorenierter Propylen-Kautschuk (FFPM)
Perflurocarbon-Kautschuk (FFKM)
Polyurethan (PU)

Von besonderer Bedeutung sind: EPDM, CM, FKM bzw. FPM, ECO, CR und NBR

Auch der Einsatz eines Verschnittes, insbesondere in Verbindung mit einem der vorgenannten Kautschuktypen, ist möglich. Die Mischungsingredienzien umfassen wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe (z.B. Fasern, Farbpigmente). Diesbezüglich wird auf den allgemeinen Stand der Kautschukmischungstechnologie verwiesen.

In Verbindung mit einem vollständig leitfähigen Schlauch ("Full-Ohm"-Schlauch) sind die Zwischenschicht/en und die Außenschicht ebenfalls elektrisch leitend ausgeführt, indem in die Elastomermatrix gleichmäßig verteilt elektrisch leitfähige Partikel eingearbeitet sind. Diesbezüglich kann auf die gleichen Möglichkeiten zurückgegriffen werden, wie sie in Verbindung mit der elektrisch leitfähigen Innenschicht aus Kunststoff bereits erwähnt wurden. Die Menge an derartigen Partikeln beträgt 3 bis 100 phr (parts per hundred rubber), insbesondere 10 bis 60 phr, und zwar bezogen auf eine Elastomerschichteinheit.

In den Schlauch ist wenigstens eine Festigkeitsträgerschicht aus einem Textilgeflecht, Stahlgeflecht oder Glasgeflecht eingearbeitet, wobei das Textilgeflecht insbesondere auf natürlichen und/oder künstlichen Fasern basiert. In Verbindung mit der Figurenbeschreibung wird ein Schlauch mit zwei derartigen Festigkeitsträgerschichten sowie mit einer zusätzlichen Wendel vorgestellt.

Der erfindungsgemäße Schlauch kommt insbesondere zum Einsatz als:
- Chemikalienschlauch
- Treibstoffschlauch
- Lebensmittelschlauch, einschließlich Trinkwasserschlauch
- Pharmaschlauch

Die Erfindung wird nun anhand eines Ausführungsbeispieles unter Bezugnahme auf eine schematische Zeichnung erläutert.

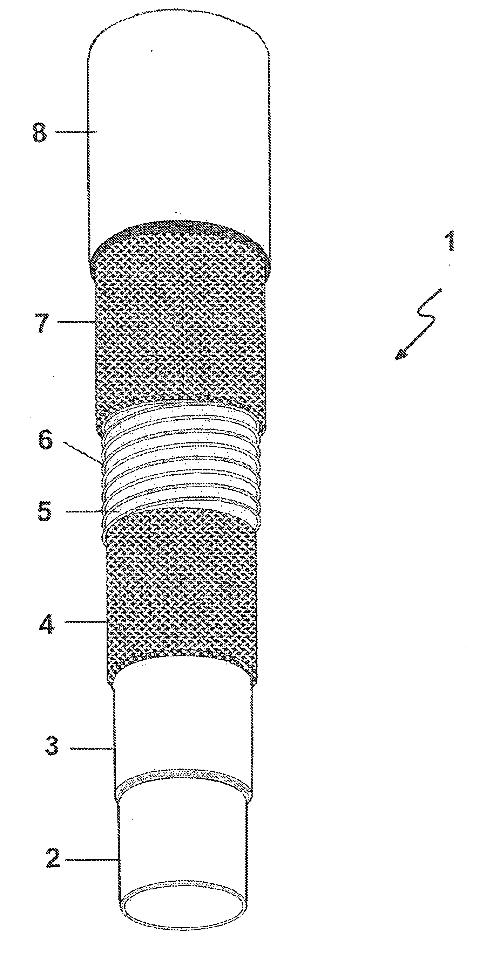

Die einzige Figur zeigt einen Schlauch 1, bestehend aus folgendem Schichtenaufbau:
- eine Innenschicht 2 aus einem elektrisch leitfähigen Kunststoff, insbesondere aus PTFE bei einer bevorzugten Stärke von 0,1 mm bis 1 mm;
- eine erste elektrisch leitfähige elastomere Zwischenschicht 3;
- eine erste Festigkeitsträgerschicht 4 aus einem Textilgeflecht, Stahlgeflecht oder Glasgeflecht;
- eine zweite elektrisch leitfähige elastomere Zwischenschicht 5;
- eine Wendel 6 aus Metall oder einem Kunststoff mit metallähnlichen Eigenschaften;
- eine zweite Festigkeitsträgerschicht 7 aus einem Textilgeflecht, Stahlgeflecht oder Glasgefecht;
- eine elastomere Außenschicht 8, die abriebfest und elektrisch leitfähig ist.

Im Rahmen von Gestaltungsvarianten kann die Innenschicht 2 glatt, schraubenförmig oder gewellt ausgebildet sein. Die Außenschicht 8, die hier glatt gestaltet ist, kann zur Erhöhung der Flexibilität gewellt oder eingeschnürt geformt sein. Bei der Herstellung der elastomeren Zwischenschichten 3 und 5 wie auch der Außenschicht 8 kommen sowohl die Extrusion als auch die Wickeltechnik zum Einsatz.

Ein derartig aufgebauter vollständig elektrisch leitfähiger Schlauch 1 findet insbesondere als Druck- und Vakuumschlauch seine Anwendung. Eine besondere Bedeutung hat diese Schlauchkonzeption bei Chemikalienschläuchen unter Hochsicherheitsanforderungen erlangt. Bei anderen Schläuchen, beispielsweise bei einem Lebensmittelschlauch, genügt zumeist eine einzige Festigkeitsträgerschicht 4 bzw. 7 ohne zweite Zwischenschicht 5 und ohne Wendel 6.

In Verbindung mit dem Schlauch 1 gemäß Ausführungsbeispiel sowie Schlauchvarianten im Rahmen des erfindungsgemäßen Schlauchkonzeptes sind ferner noch folgende Vorteile zu nennen:
- Insbesondere in Verbindung mit einem "Full-Ohm"-Schlauch findet eine sofortige Ableitung potentiell auftretender elektrischer Ladung bei schnellem Mediendurchfluss über die gesamten Schlauchschichten statt, womit eine Erfüllung der DIN EN 12115 zu erzielen ist.
- Er eröffnet eine einfache Armaturenmontage, da ein Anschluss eines metallischen Leiters (z.B. Kupferlitze) entfällt.
- Aufgrund der Verwendung einer Innenschicht aus einem elektrisch leitfähigen Kunststoff in Form einer Folie oder als nahtlos extrudierter Innenschlauch werden zudem bessere physikalische und chemische Eigenschaften erreicht, insbesondere im Hinblick auf dynamische Tüchtigkeit, hohe Temperaturbeständigkeit, geringen Strömungsverlust, chemische Beständigkeit, Korrosionsfestigkeit, Antihafteigenschaften sowie leichte Reinigung. Unter diesem Aspekt ist PTFE der ideale Werkstoff.
- Insbesondere das PTFE besitzt eine FDA-Zulassung und kann dadurch in einem weiten Anwendungsbereich, beispielsweise in der Pharma- und Lebensmittelindustrie, für hochreine Produkte eingesetzt werden.

### Bezugszeichenliste

### (Teil der Beschreibung)

- 1: Schlauch
- 2: Innenschicht (Seele)
- 3: erste Zwischenschicht
- 4: erste Festigkeitsträgerschicht
- 5: zweite Zwischenschicht
- 6: Wendel (Spiralwendel)
- 7: zweite Festigkeitsträgerschicht
- 8: Außenschicht (Decke, Mantel)

## Patentansprüche

1. Schlauch (1), bestehend wenigstens aus:
- einer Innenschicht (2) aus Kunststoff, der beständig gegenüber dem zu fördernden Medium ist;
- einer oder mehreren elastomeren Zwischenschicht/en (3, 5), wobei eine Zwischenschicht (3) mit der Innenschicht (2) in direkter Verbindung steht;
- einer oder mehreren eingebetteten Festigkeitsträgerschicht/en (4, 7) sowie
- einer abriebfesten elastomeren Außenschicht (8);
wobei die Innenschicht (2) aus einem elektrisch leitfähigen oder elektrisch leitfähig einstellbaren fluorhaltigen Kunststoff in Form von Polytetrafluorethylen (PTFE), Polyvinylfluorid (PVF), Polyvinylidenfluorid (PVDF) oder deren chemischen Modifikationen besteht, indem in die Innenschicht (2) elektrisch leitfähige Partikel eingearbeitet sind, wobei ferner die Innenschicht (2) mit der Zwischenschicht (3), mit der sie in direkter Verbindung steht, einen dauerfesten Haftverbund bildet, **dadurch gekennzeichnet, dass**
- die Innenschicht (2) in Form einer Folie vorliegt oder ein nahtlos extrudierter Innenschlauch ist und
- die elektrisch leitfähigen Partikel gleichmäßig verteilt in einer Menge von 1 bis 2,5 Gew.-% vorhanden sind, und zwar bezogen auf die Gesamtmasse der Innenschicht (2).

2. Schlauch nach Anspruch 1, **gekennzeichnet durch** folgenden Schichtenaufbau:
- eine Innenschicht (2) aus einem elektrisch leitfähigen oder elektrisch leitfähig einstellbaren Kunststoff;
- eine erste elastomere Zwischenschicht (3), die mit der Innenschicht (2) einen dauerfesten Haftverbund bildet;
- eine erste und zweite Festigkeitsträgerschicht (4, 7), wobei die erste Festigkeitsträgerschicht (4) mit der ersten Zwischenschicht (3) in direkter Verbindung steht, wobei ferner beide Festigkeitsträgerschichten **durch** eine zweite elastomere Zwischenschicht (5) von einander getrennt sind;
- sowie eine abriebfeste elastomere Außenschicht (8), die in direkter Verbindung mit der zweiten Festigkeitsträgerschicht (7) steht.

3. Schlauch nach Ansprüch 1 oder 2, **dadurch gekennzeichnet, dass** die Innenschicht (2) zumindest innerhalb ihrer Kontaktseite zu der mit ihr in Verbindung stehenden Zwischenschicht (3) oberflächenaktiviert ist.

4. Schlauch nach Anspruch 3, **dadurch gekennzeichnet, dass** die Innenschicht (2) angeätzt oder aufgeraut ist.

5. Schlauch nach einem der Ansprüche 1 bis 4, **dadurch gekennzeichnet, dass** die elektrisch leitfähigen Partikel Ruß und/oder Graphit und/oder Nanotubes sind.

6. Schlauch nach einem der Ansprüche 1 bis 4, **dadurch gekennzeichnet, dass** die elektrisch leitfähigen Partikel ein Polymer, ein Polymerblend oder eine Polymermischung mit elektrisch leitfähigen funktionellen Gruppen sind.

7. Schlauch nach einem der Ansprüche 1 bis 6, **dadurch gekennzeichnet, dass** die Stärke der Innenschicht (2) 0,01 mm bis 3 mm beträgt.

8. Schlauch nach einem der Ansprüche 1 bis 7, **dadurch gekennzeichnet, dass** die Zwischenschicht/en (3, 5) und/oder die Außenschicht (8) auf einer vulkanisierten Kautschukmischung basiert/basieren, enthaltend wenigstens eine Kautschukkomponente und Mischungsingredienzien.

9. Schlauch nach Anspruch 8, **dadurch gekennzeichnet, dass** die Kautschukkomponente ein Ethylen-Propylen-Mischpolymerisat (EPM), ein Ethylen-Propylen-Dien-Mischpolymerisat (EPDM), Nitrilkautschuk (NBR), (teil)hydrierter Nitrilkautschuk (HNBR) Fluor-Kautschuk (FPM bzw. FKM), Chloropren-Kautschuk (CR), Naturkautschuk (NR), Styrol-Butadien-Kautschuk (SBR), Isopren-Kautschuk (IR), Butylkautschuk (IIR), Brombutylkautschuk (BIIR), Chlorbutylkautschuk (CIIR), Butadien-Kautschuk (BR), Chloriertes Polyethylen (CM), Chlorsulfoniertes Polyethylen (CSM), Polyepichlorhydrin (ECO), Ethylen-Vinylacetat-Kautschuk (EVA), Acrylat-Kautschuk (ACM), Siliconkautschuk (MVQ), Fluorierter Methylsiliconkautschuk (MFQ), Perfluorinierter Propylen-Kautschuk (FFPM), Perfluorocarbon-Kautschuk (FFKM) oder Polyurethan (PU) ist, gegebenenfalls unter Einsatz eines Verschnittes, insbesondere in Verbindung mit einem der vorgenannten Kautschuktypen.

10. Schlauch nach einem der Ansprüche 1 bis 9, **dadurch gekennzeichnet, dass** die Zwischenschicht/en (3, 5) und/oder die Außenschicht (8) elektrisch leitend ausgeführt ist/sind.

11. Schlauch nach Anspruch 10, **dadurch gekennzeichnet, dass** die Zwisohenschicht/en (3, 5) und/oder die Außenschicht (8) eine Elastomermatrix umfasst/umfassen, in die elektrisch leitfähige Partikel eingearbeitet sind.

12. Schlauch nach Anspruch 11, **dadurch gekennzeichnet, dass** die elektrisch leitfähigen Partikel Ruß und/oder Graphit und/oder Nanotubes sind.

13. Schlauch nach Anspruch 11, **dadurch gekennzeichnet, dass** die elektrisch leitfähigen Partikel ein Polymer, ein Polymerblend oder eine Polymermischung mit elektrisch leitfähigen funktionellen Gruppen sind.

14. Schlauch nach einem der Ansprüche 11 bis 13, **dadurch gekennzeichnet, dass** die elektrisch leitfähigen Partikel der Zwischenschicht/en (3,5) und/oder der Außenschicht (8) in einer Menge von 3 bis 100 phr vorhanden sind, und zwar bezogen auf eine Elastomerschichteinheit.

15. Verwendung eines Schlauches nach einem der Ansprüche 1 bis 14, wobei der Schlauch (1) als Chemikalienschlauch, Treibstoffschlauch, Lebensmittelschlauch einschließlich Trinkwasserschlauch oder als Pharmaschlauch verwendet wird.

## Claims

1. Hose (1), composed at least of:
- an inner layer (2) made of plastic which is resistant to the fluid to be conveyed;
- one or more elastomeric intermediate layers (3, 5), where an intermediate layer (3) is in direct contact with the inner layer (2);
- one or more embedded reinforcing layers (4, 7), and also
- an abrasion-resistant elastomeric external layer (8);
where the inner layer (2) is composed of a fluorine-containing plastic which is electrically conductive or can be rendered electrically conductive, in the form of polytetrafluoroethylene (PTFE), polyvinyl fluoride (PVF), polyvinylidene fluoride (PVDF) or chemical modifications of these, in that electrically conductive particles have been incorporated into the inner layer (2), where moreover the inner layer (2) forms a durable adhesive bond with the intermediate layer (3) with which it is in direct contact, **characterized in that**
- the inner layer (2) takes the form of a foil or is an inner hose extruded so as to be seamless and
- the electrically conductive particles are present with uniform distribution in an amount of from 1 to 2.5% by weight, specifically based on the total mass of the inner layer (2).

2. Hose according to Claim 1, **characterized by** the following layer structure:
- an inner layer (2) made of a plastic which is electrically conductive or can be rendered electrically conductive;
- a first elastomeric intermediate layer (3) which forms a durable adhesive bond with the inner layer (2);
- a first and second reinforcing layer (4, 7), where the first reinforcing layer (4) is in direct contact with the first intermediate layer (3), where moreover there is a second elastomeric intermediate layer (5) separating the two reinforcing layers from one another;
- and also an abrasion-resistant elastomeric external layer (8) which is in direct contact with the second reinforcing layer (7).

3. Hose according to Claim 1 or 2, **characterized in that** the inner layer (2) has been surface-activated at least within its side of contact with the intermediate layer (3) that is in contact therewith.

4. Hose according to Claim 3, **characterized in that** the inner layer (2) has been subjected to incipient etching or to roughening.

5. Hose according to any of Claims 1 to 4, **characterized in that** the electrically conductive particles are carbon black and/or graphite and/or nanotubes.

6. Hose according to any of Claims 1 to 4, **characterized in that** the electrically conductive particles are a polymer, a polymer blend or a polymer mixture having electrically conductive functional groups.

7. Hose according to any of Claims 1 to 6, **characterized in that** the thickness of the inner layer (2) is from 0.01 mm to 3 mm.

8. Hose according to any of Claims 1 to 7, **characterized in that** the intermediate layer(s) (3, 5) and/or the external layer (8) is/are based on a vulcanized rubber mixture comprising at least one rubber component and mixture ingredients.

9. Hose according to Claim 8, **characterized in that** the rubber component is an ethylene-propylene copolymer (EPM), an ethylene-propylene-diene copolymer (EPDM), nitrile rubber (NBR), (partially) hydrogenated nitrile rubber (HNBR), fluororubber (FPM or FKM), chloroprene rubber (CR), natural rubber (NR), styrene-butadiene rubber (SBR), isoprene rubber (IR), butyl rubber (IIR), bromobutyl rubber (BIIR), chlorobutyl rubber (CIIR), butadiene rubber (BR), chlorinated polyethylene (CM), chlorosulphonated polyethylene (CSM), polyepichlorohydrin (ECO), ethylene-vinyl acetate rubber (EVA), acrylate rubber (ACM), silicone rubber (MVQ), fluorinated methylsilicone rubber (MFQ), perfluorinated propylene rubber (FFPM), perfluorocarbon rubber (FFKM) or polyurethane (PU), optionally with use of a blend, in particular in conjunction with one of the abovementioned types of rubber.

10. Hose according to any of Claims 1 to 9, **characterized in that** the intermediate layer(s) (3, 5) and/or the external layer (8) has/have been designed to be electrically conductive.

11. Hose according to Claim 10, **characterized in that** the intermediate layer(s) (3, 5) and/or the external layer (8) comprise(s) an elastomer matrix into which electrically conductive particles have been incorporated.

12. Hose according to Claim 11, **characterized in that** the electrically conductive particles are carbon black and/or graphite and/or nanotubes.

13. Hose according to Claim 11, **characterized in that** the electrically conductive particles are a polymer, a polymer blend or a polymer mixture having electrically conductive functional groups.

14. Hose according to any of Claims 11 t o 1 3 , **characterized in that** the amount present of the electrically conductive particles of the intermediate layer(s) (3, 5) and/or of the external layer (8) is from 3 to 100 phr, specifically based on an elastomer layer unit.

15. Use of a hose according to any of Claims 1 to 14, where the hose (1) is used as hose for chemicals, for fuel, for food or drink inclusive of drinking water, or for pharmaceutical products.

## Revendications

1. Tuyau (1), constitué par au moins :
- une couche interne (2) en plastique qui est résistante au milieu à transporter ;
- une ou plusieurs couches intermédiaires élastomères (3, 5), une couche intermédiaire (3) étant en contact direct avec la couche interne (2) ;
- une ou plusieurs couches de renforcement incorporées (4, 7) ; et
- une couche externe élastomère résistante à l'abrasion (8) ;
la couche interne (2) étant constituée d'un plastique contenant du fluor conducteur électrique ou à conductivité électrique ajustable sous la forme de polytétrafluoroéthylène (PTFE), de polyfluorure de vinyle (PVF), de polyfluorure de vinylidène (PVDF) ou leurs modifications chimiques, des particules conductrices électriques étant incorporées dans la couche interne (2), la couche interne (2) formant par ailleurs une liaison par adhésion durable avec la couche intermédiaire (3) avec laquelle elle est en contact direct, **caractérisé en ce que**
- la couche interne (2) se présente sous la forme d'un film ou est un tuyau interne extrudé sans soudure, et
- les particules conductrices électriques sont présentes réparties uniformément en une quantité de 1 à 2,5 % en poids, et ce par rapport à la masse totale de la couche interne (2).

2. Tuyau selon la revendication 1, **caractérisé par** la structure de couches suivante :
- une couche interne (2) en un plastique conducteur électrique ou de conductivité électrique ajustable ;
- une première couche intermédiaire élastomère (3) qui forme une liaison par adhésion durable avec la couche interne (2) ;
- une première et une deuxième couche de renforcement (4, 7), la première couche de renforcement (4) étant en contact direct avec la première couche intermédiaire (3), les deux couches de renforcement étant par ailleurs séparées l'une de l'autre par une deuxième couche intermédiaire élastomère (5) ;
- et une couche externe élastomère résistante à l'abrasion (8) qui est en contact direct avec la deuxième couche de renforcement (7).

3. Tuyau selon la revendication 1 ou 2, **caractérisé en ce que** la couche interne (2) est activée en surface au moins sur son côté de contact avec la couche intermédiaire (3) avec laquelle elle est en contact.

4. Tuyau selon la revendication 3, **caractérisé en ce que** la couche interne (2) est gravée en surface ou rugosifiée.

5. Tuyau selon l'une quelconque des revendications 1 à 4, **caractérisé en ce que** les particules conductrices électriques sont de la suie et/ou du graphite et/ou des nanotubes.

6. Tuyau selon l'une quelconque des revendications 1 à 4, **caractérisé en ce que** les particules conductrices électriques sont un polymère, un alliage de polymères ou un mélange de polymères contenant des groupes fonctionnels conducteurs électriques.

7. Tuyau selon l'une quelconque des revendications 1 à 6, **caractérisé en ce que** l'épaisseur de la couche interne (2) est de 0,01 mm à 3 mm.

8. Tuyau selon l'une quelconque des revendications 1 à 7, **caractérisé en ce que** la ou les couches intermédiaires (3, 5) et/ou la couche externe (8) sont à base d'un mélange de caoutchouc vulcanisé, contenant au moins un composant caoutchouc et des ingrédients de mélange.

9. Tuyau selon la revendication 8, **caractérisé en ce que** le composant caoutchouc est un copolymère éthylène-propylène (EPM), un copolymère éthylène-propylène-diène (EPDM), un caoutchouc de nitrile (NBR), un caoutchouc de nitrile (partiellement) hydrogéné (HNBR), un caoutchouc fluoré (FPM ou FKM), un caoutchouc de chloroprène (CR), un caoutchouc naturel (NR), un caoutchouc de styrène-butadiène (SBR), un caoutchouc d'isoprène (IR), un caoutchouc de butyle (IIR), un caoutchouc de bromobutyle (BIIR), un caoutchouc de chlorobutyle (CIIR), un caoutchouc de butadiène (BR), un polyéthylène chloré (CM), un polyéthylène chlorosulfoné (CSM), une polyépichlorhydrine (ECO), un caoutchouc éthylène-acétate de vinyle (EVA), un caoutchouc d'acrylate (ACM), un caoutchouc de silicone (MVQ), un caoutchouc de méthylsilicone fluoré (MFQ), un caoutchouc de propylène perfluoré (FFPM), un caoutchouc de perfluorocarbure (FFKM) ou un polyuréthane (PU), éventuellement en utilisant une coupe, notamment en association avec un des types de caoutchouc susmentionnés.

10. Tuyau selon l'une quelconque des revendications 1 à 9, **caractérisé en ce que** la ou les couches intermédiaires (3, 5) et/ou la couche externe (8) sont conçues sous forme conductrice électrique.

11. Tuyau selon la revendication 10, **caractérisé en ce que** la ou les couches intermédiaires (3, 5) et/ou la couche externe (8) comprennent une matrice élastomère dans laquelle des particules conductrices électriques sont incorporées.

12. Tuyau selon la revendication 11, **caractérisé en ce que** les particules conductrices électriques sont de la suie et/ou du graphite et/ou des nanotubes.

13. Tuyau selon la revendication 11, **caractérisé en ce que** les particules conductrices électriques sont un polymère, un alliage de polymères ou un mélange de polymères contenant des groupes fonctionnels conducteurs électriques.

14. Tuyau selon l'une quelconque des revendications 11 à 13, **caractérisé en ce que** les particules conductrices électriques de la ou des couches intermédiaires (3, 5) et/ou de la couche externe (8) sont présentes en une quantité de 3 à 100 phr, et ce par rapport à une unité de couche élastomère.

15. Utilisation d'un tuyau selon l'une quelconque des revendications 1 à 14, dans laquelle le tuyau (1) est utilisé en tant que tuyau pour produits chimiques, tuyau pour carburant, tuyau pour produits alimentaires, y compris tuyau pour eau potable, ou en tant que tuyau pour produits pharmaceutiques.
